(19) Europäisches Patentamt

European Patent Office

Office européen des brevets

(11) **EP 1 069 800 A1**

(12) **EUROPÄISCHE PATENTANMELDUNG**

(43) Veröffentlichungstag:
**17.01.2001 Patentblatt 2001/03**

(51) Int. Cl.⁷: **H04Q 11/04**, H04L 12/56

(21) Anmeldenummer: **99110240.1**

(22) Anmeldetag: **26.05.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder:
**SIEMENS AKTIENGESELLSCHAFT**
**80333 München (DE)**

(72) Erfinder:
• **Rammer, Josef Dr.**
  **1100 Wien (AT)**
• **Conte, Marco**
  **1120 Wien (AT)**
• **Fischer, Gerhard**
  **1210 Wien (AT)**
• **Bella, Luigi**
  **2202 HZ Noordwijk a/zee (NL)**
• **Chummun, Ferial**
  **2311 gg Leiden (NL)**

(54) **Verfahren zur Bewertung von Übertragungswegen in einem Kommunikationsnetz**

(57) Die Bewertung von Übertragungswegen U eines Kommunikationsnetzes KN, in dem Informationsübermittlungen mit unterschiedlichen Datenraten bewirkt werden, erfolgt nach Maßgabe einer Bewertungsvorschrift, deren Bewertungsaufwand im wesentlichen linear von der Kapazität MaxCR des jeweiligen Übertragungswegs U abhängt. Somit bleibt der Bewertungsaufwand auch für Übertragungswege U mit hoher Kapazität MaxCR begrenzt.

FIG 2

EP 1 069 800 A1

Printed by Xerox (UK) Business Services
2.16.7 (HRS)/3.6

**Beschreibung**

Kommunikationsnetze werden üblicherweise entweder als paketorientierte oder als leitungsorientierte Netze ausgebildet. Hierbei sind paketorientierte Netze eher für die Übermittlung von Informationen ohne Echtzeitcharakter wie z.B. Daten, EMail oder Dateien geeignet, während leitungsorientierte Netze gut auf die Übermittlung von Informationen mit Echtzeitcharakter wie z.B. Sprache oder Bewegtbilder ausgelegt sind. Im Zuge der Konvergenz von leitungs- und paketorientierten Netzen werden jedoch in paketorientierten Netzen zunehmend auch Sprach- und Bewegtbildinformationen übermittelt. Beispiele für paketorientierte Netze sind das Internet oder ATM (= Asynchronous Transfer Modus), wobei die Bezeichnung ATM gelegentlich auch als Synonym für B-ISDN (= Broadband Integrated Services Digital Network) verwendet wird. Am Beispiel von ATM sei die paketorientierte Netztechnologie im weiteren näher erläutert.

Charakteristisch für paketorientierte Netze ist die paketorientierte Übermittlung der Informationen. In ATM-Netzen werden hierbei die Informationen beispielsweise in Pakete gleicher Länge - auch "ATM-Zellen" genannt - aufgeteilt, die einen 5 Bytes umfassenden Zellenkopf (Header) und einen 48 Bytes umfassenden Informationsteil (Payload) aufweisen. Dabei werden die einzelnen Zellen durch die Zellenköpfe bestimmten Informationsströmen - auch "virtuelle Verbindungen" genannt - zugeordnet. Im Gegensatz zu beispielsweise einem leitungsorientierten TDMA-Verfahren, bei welchem Zeitschlitze verschiedenen Typen von Datenverkehr im vorhinein zugeordnet sind, werden die bei einer ATM-Schnittstelle ankommenden Informationsströme in die erwähnten 53-Byte-Zellen segmentiert und anschließend diese Zellen sequentiell in der Reihenfolge, in der sie erzeugt wurden, weiter gesandt. Das bei TDMA zum Einsatz kommende Multiplexverfahren wird auch als "statisches Multiplexing" und das bei ATM zum Einsatz kommende als "statistisches Multiplexing" bezeichnet. In Folge der Flexibilität des statistischen Multiplexing können die Informationsströme bei ATM beliebige Datenraten aufweisen, während bei statischem Multiplexing die Datenrate der einzelnen Informationsströme - auch "Verbindungen" genannt - wegen der festen Zuordnung der Zeitschlitze zu den Informationsströmen festgelegt ist - z.B. auf 64 kbit/s bei ISDN.

In Folge dieses Unterschieds ist in paketorientierten Netzen das Routen einer beantragten Verbindung abhängig von der auf einer Route verfügbaren Restkapazität, während sie in leitungsorientierten Netzen prinzipiell unabhängig von der Auslastung der einzelnen Übertragungswege ist. Beispielsweise kann auf einer Route in einem leitungsorientierten Netz, entlang der z.B. gemäß einem TDM Verfahren 30 Verbindungen in fest zugeordneten Zeitschlitzen mit je 64 kbit/s Kapazität geführt werden können, auch dann in jedem Fall eine weitere Verbindung aufgebaut werden, wenn bereits 29 Verbindungen aufgebaut sind, da die weitere Verbindung wegen ihrer konstanten Datenrate keine höhere Datenrate erfordert als die noch verfügbare Restkapazität von 64 kbit/s. Entlang einer Route in einem paketorientierten Netz mit einer angenommenen Restkapazität von 30 Mbit/s können jedoch lediglich Verbindungen aufgebaut werden, für die eine Datenrate kleiner als 30 Mbit/s beantragt worden ist. Verbindungen mit einer höheren Datenrate werden jedoch zurückgewiesen. Sofern alternative Routen existieren, können sie ersatzweise entlang einer Alternativroute mit ausreichender Restkapazität aufgebaut werden. Zur Ermittlung einer Alternativroute ist jedoch ein erneutes Routen erforderlich.

Es sind verschiedene Routing-Verfahren bekannt, mit denen Routen in Netzen ermittelt werden können. Eine Möglichkeit ist das sog. "Source-Routing", bei dem ausgehend von einem Anfangs-Vermittlungsknoten die komplette Route zu einem Ziel-Vermittlungsknoten ermittelt wird. Für ATM-Netze ist beispielsweise seitens des ATM-Forums im Rahmen der sogenannten PNNI(= Private Network-Network Interface)-Spezifikation Source-Routing gefordert. Hierbei wird die Route von dem Anfangs-Vermittlungsknoten ermittelt und anschließend beim Verbindungsaufbau die berechnete Route an die Vermittlungsknoten entlang der Route mit Hilfe der Signalisierung übermittelt. Eine weitere Möglichkeit stellt das sog. "Hop-by-Hop-Routing" dar, bei dem von jedem Vermittlungsknoten entlang einer Route der Rest bzw. das nächste Teilstück der Route neu berechnet wird. Dieses Verfahren kommt beispielsweise im Internet oder in ATM-Netzen ohne Source-Routing zur Anwendung.

Um beim Routen diejenigen Routen auszuscheiden, die überlastete oder unterbrochene Übertragungswege verwenden würden, sind in der PNNI-Spezifikation sog. Flooding-Verfahren vorgeschlagen. Dabei werden von allen Vermittlungsknoten zu definierten Zeitpunkten die Verkehrswerte der an sie angeschlossenen Übertragungswege gemessen und an alle anderen Vermittlungsknoten innerhalb einer Gruppe weitergegeben. Diese Informationsweitergabe wird "Flooding" genannt. Das Flooding kann zusätzlich auch dann veranlaßt werden, wenn sich die Verkehrswerte der Übertragungswege signifikant verändern - z.B. wenn die aktuelle Auslastung eines Übertragungsweges mit einer Gesamtkapazität von 150 Mbit/s um mehr als 10 Mbit/s von der zuletzt weitergegebenen Auslastung abweicht. Beispielsweise sind in ATM-Netzen im Rahmen der PNNI-Spezifikation Verfahren vorgeschlagen, welche einem Routing-Algorithmus die in den Vermittlungsknoten des ATM-Netzes jeweils zuletzt gemessenen Verkehrswerte der direkt an diese angeschlossenen Übertragungswege zur Verfügung stellen.

Für das Routen in leitungs- und verbindungsorientierten Netzen ist in K. R. Krishnan, Huebner-Szabo de Bucs, "Admission Control and State-Dependent Routing for Multirate Circuit-Switched Traffic", ITC-15, Seiten 1043-1054, 1997 ein dynamisches Routing-Verfahren für Breitbandnetze offenbart, bei dem deren Übertragungswege in Abhängigkeit von ihrer Belastung durch Informationsübermittlungen bewertet werden. Hierzu werden für die Übertragungswege Belegungswahrscheinlichkeiten in Abhängigkeit von diesen zugeführten Verkehrsangeboten, deren aktueller Auslastung sowie der für eine zusätzliche Informationsübermittlung entlang einer weiteren Verbindung erforderlichen Datenrate berechnet. Es wird ein weitgehend vollständig vermaschtes Kommunikationsnetz vorausgesetzt, was in der obersten Hierarchie-Ebene von hierarchisch strukturierten, leitungsorientierten Telephonnetzen üblich ist. Somit ist jeder Übertragungsweg auf der obersten Hierarchie-Ebene bis auf wenige Ausnahmefälle mit Verbindungen belegt, die lediglich einen einzigen Hop von ihrem Start-Vermittlungsknoten auf der obersten Hierarchie-Ebene zu ihrem Ziel-Vermittlungsknoten auf der obersten Hierarchie-Ebene erfordern. Bei der Ermittlung der Belegungswahrscheinlichkeiten der einzelnen Übertragungswege wird folglich für jeden der Übertragungswege lediglich der angebotene Verkehr betrachtet, der direkt zwischen den beiden Vermittlungsknoten, die mit dem Übertragungsweg verbunden sind, übermittelt wird. Die Ermittlung der Linkkosten erfolgt mit Hilfe von dynamischer Programmierung und durch Lösung eines linearen Gleichungssystems. Es wird hierbei die Matrix der Übergangsraten der möglichen Auslastungen definiert als $\hat{A} = (\hat{a}_{ij})$, wobei das Matrixelement $\hat{a}_{ij}$ die Rate des Übergangs von der Auslastung i zu der Auslastung j beschreibt. Die Linkkostenfunktionen v(i,j) des Übergangs von der Auslastung i zu der Auslastung j werden als $v(i,j) = z_j - z_i$, wobei die Werte $z_i$ und $z_j$ sich aus dem Gleichungssystem

$$BR = w_i + \sum_{j=0}^{MaxCR} \hat{a}_{ij} z_j, i=1,...,MaxCR.$$

ergeben. Der Wert $w_i$ ist die Blockierungsrate des Übertragungswegs im Zustand i, BR ist die gesamte Blockierungsrate des Übertragungsweges, die sich aus der Matrix $\hat{A}$ errechnet. Der Aufwand für die Lösung des Gleichungssystems steigt hierbei mit zunehmender Kapazität der Übertragungswege überproportional im Vergleich zu der Zunahme der Kapazität an. Das Gleichungssystem wird somit für Übertragungswege mit großer Kapazität rasch sehr komplex. Beispielsweise ist bereits für einen Übertragungsweg mit einer Kapazität von 155 Mbit/s und einer kleinsten durchschnittlichen Datenrate von 64 kbit/s die Lösung eines Gleichungssystem mit ca. 2422 Gleichungen erforderlich. Die Bewertungsvorschriften basieren hierbei lediglich auf bi-direktionalen, symmetrischen Verbindungen. Bei Betrachtung von uni-direktionalen Verbindungen steigt die Anzahl der Gleichungen weiter an.

Der Erfindung liegt die Aufgabe zugrunde, die Bewertung von Übertragungswegen zu verbessern. Die Aufgabe wird durch die Merkmale des Patentanspruchs 1 gelöst.

Der wesentliche Aspekt der Erfindung besteht in einem Verfahren zur Bewertung von Übertragungswegen eines Kommunikationsnetzes, in dem Informationsübermittlungen mit unterschiedlichen Datenraten erfolgen, bei dem die Bewertung nach Maßgabe einer Bewertungsvorschrift, deren Bewertungsaufwand im wesentlichen linear von der Kapazität des jeweiligen Übertragungswegs abhängt, erfolgt. Der wesentliche Vorteil der Erfindung ist darin zu sehen, daß der Aufwand für die Bewertung von Übertragungswegen mit hoher Kapazität begrenzt ist. Zudem eignet sich die Erfindung besonders gut zur Verwendung in zeitgemäßen paketorientierten Netzen, z.B. ATM-Netzen, IP-Netzen oder dem Internet, für die Informationsübermittlungen mit flexiblen Datenraten kennzeichnend sind.

Entsprechend einer Ausgestaltung des erfindungsgemäßen Verfahrens erfolgen die Bewertungen jeweils in Abhängigkeit von zumindest einem variablen Bewertungsparameter - Anspruch 2. Nach einer Variante des erfindungsgemäßen Verfahrens ist vorgesehen, daß die Bewertungen jeweils in Abhängigkeit von einem einzigen variablen Bewertungsparameter erfolgen und alle weiteren Bewertungsparameter konstant sind - Anspruch 3. Gemäß einer Ausgestaltung des erfindungsgemäßen Verfahrens ist der variable Bewertungsparameter jeweils als Auslastung des Übertragungswegs ausgebildet - Anspruch 5. Somit ist die Erfindung besonders schön in Netzen mit Flooding-Verfahren verwendbar.

Nach einer weiteren Ausgestaltung des erfindungsgemäßen Verfahrens ist der variable Bewertungsparameter unabhängig von einer gegebenen Informationsübermittlungsanforderung - Anspruch 4. Gemäß einer Weiterbildung des erfindungsgemäßen Verfahrens ist vorgesehen, daß die Bewertung des Übertragungswegs jeweils bei Auslastungen, die größer sind als dessen Schwellauslastung, derart ausgebildet ist, daß entlang diesem keine zusätzlichen Informationsübermittlungen erfolgen - Anspruch 6. Nach einer Weiterbildung des erfindungsgemäßen Verfahrens ist die Schwellauslastung eines Übertragungswegs hierbei jeweils gleich seiner Kapazität abzüglich der maximalen durchschnittlichen Datenrate, die für die Informationsübermittlungen jeweils höchstens erforderlich sind - Anspruch 7. Hierdurch wird vorteilhaft eine Fairness Politik bewirkt, gemäß der sich für alle Informationsübermittlungen ungeachtet der für diese erforderlichen Datenraten die gleiche Zurückweisungswahrscheinlichkeit ergibt, da vor Überschreiten der Schwellauslastung jede der Informationsübermittlungen und nach Überschreiten der Schwellauslastung keine der Informationsübermittlungen erfolgt.

Gemäß einer Ausgestaltung des erfindungsgemäßen Verfahrens erfolgt die Bewertung gemäß einer gegebenen Bewertungsvorschrift zumindest in Abhängigkeit von Auslastungswahrscheinlichkeiten, gegebenen Auslastungen und Kapazitäten, einer Cell Rate Margin und Wahrscheinlichkeiten, daß für eine Informationsübermittlung eine Datenrate von *j* bit/s erforderlich ist - Anspruch 8. Somit werden vorteilhaft unterschiedliche Anforderungsprofile der Nutzer des Kommunikationsnetzes bei der Bewertung berücksichtigt. Zudem werden Zeitdauer und zeitliche Verteilung der Informationsübermittlungen vorteilhaft in die Bewertung miteinbezogen. Da lediglich wahrscheinlichkeitstheoretische Bewertungsvorschriften zum Einsatz kommen, werden die Bewertungen durch die hiermit üblicherweise verbundene Summenbildung von gewichteten Wahrscheinlichkeitswerten auf sehr einfache und effiziente Weise ermittelt, d.h. zur Bewertung sind weder Näherungsverfahren noch die berechnungsintensive Lösung eines großen linearen Gleichungssystems erforderlich. Insbesondere werden die zur Anwendung kommenden Operationen 'Summe', 'Multiplikation' bzw. 'Division' von zeitgemäßen Prozessoren im allgemeinen sehr effizient unterstützt. Weiterhin fließt die häufig unterschiedliche Charakteristik der einzelnen Übertragungswege vorteilhaft in die Bewertung mit ein. Somit wird durch die Bewertungen vorteilhaft berücksichtigt, ob ein Übertragungsweg mit häufig wechselnden und in ihren Datenraten starken Schwankungen unterworfenen Informationsübermittlungen - z.B. Datenverkehr - ausgelastet oder eher sehr gleichmäßig mit lange andauernden, oft sehr ähnliche Datenraten erfordernden Informationsübermittlungen - z.B. Telephonverkehr - belastet ist.

Das erfindungsgemäße Verfahren wird im folgenden anhand von mehreren Figuren näher erläutert. Dabei zeigt

Figur 1    in einem Blockschaltbild ein Kommunikationsnetz mit Vermittlungsknoten und Übertragungswegen,

Figur 2    in einem Diagramm eine als Linkkostenfunktion ausgebildete Bewertung

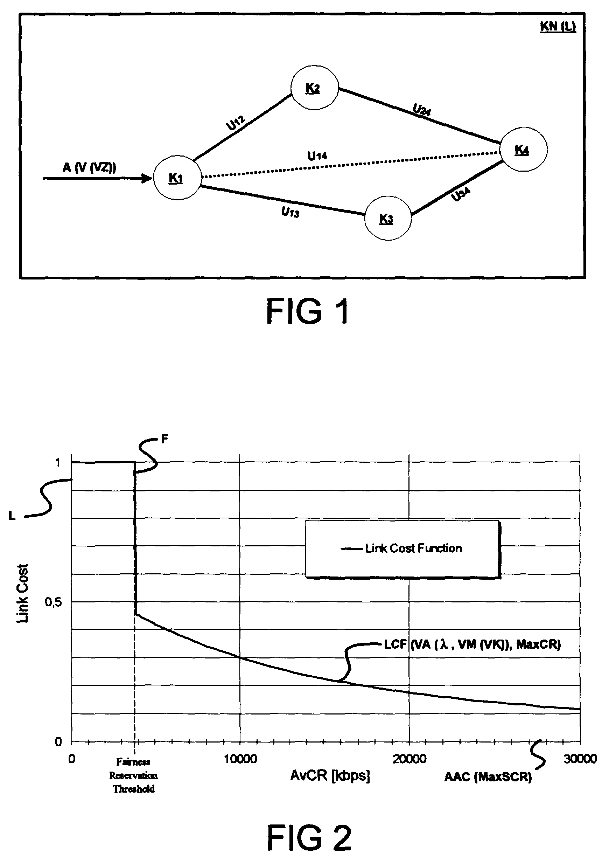

In Figur 1 ist ein Kommunikationsnetz KN mit vier Vermittlungsknoten $K_i$, $1 \leq i \leq 4$ dargestellt. Der Vermittlungsknoten $K_1$ ist mit dem Vermittlungsknoten $K_2$ durch einen Übertragungsweg $U_{12}$ und mit dem Vermittlungsknoten $K_3$ durch einen Übertragungsweg $U_{13}$ verbunden; der Vermittlungsknoten $K_4$ ist mit dem Vermittlungsknoten $K_2$ durch einen Übertragungsweg $U_{24}$ und mit dem Vermittlungsknoten $K_3$ durch einen Übertragungsweg $U_{34}$ verbunden; zwischen den Vermittlungsknoten $K_1$ und $K_4$ ist zudem ein Übertragungsweg $U_{14}$ vorgesehen, der in der Zeichnung gepunktet dargestellt ist. Hierdurch sei angedeutet, daß Übertragungswege U - beispielsweise der Übertragungsweg $U_{14}$ - temporär überlastet und/oder unterbrochen sein können. Durch einen dem Vermittlungsknoten $K_1$ zugeführten Pfeil wird zudem angedeutet, daß diesem Vermittlungsknoten $K_1$ eine Informationsübermittlungsanforderung A - z.B. in einem verbindungsorientierten Kommunikationsnetz KN entlang einer Verbindung V - zu einem Verbindungsziel VZ - beispielsweise dem Vermittlungsknoten $K_4$ - übermittelt wird.

In Figur 2 sind in einem Diagramm mit Hilfe einer beispielsweise als Linkkostenfunktion LCF ausgebildeten Bewertungsvorschrift die Bewertungen dargestellt, die sich für einen bestimmten Übertragungswegtyp in Abhängigkeit von dessen Auslastung AAC ergeben. Hierbei sei ein Übertragungswegtyp beispielsweise durch sein Verkehrsangebot VA und seine Kapazität MaxCR gekennzeichnet. Das Verkehrsangebot VA sei beispielsweise durch dessen Verkehrsangebotsrate $\lambda$ und dessen charakteristischen Verkehrsmix VM von Informationsübermittlungen, die ggf. unterschiedlichen Verkehrsklassen VK zugeordnet sind, bestimmt. Auf der Abszisse des Diagramms - auch 'x-Achse' genannt - ist die aktuell verfügbare Zellrate AvCR des entsprechenden Übertragungswegs U, und auf der Ordinate - auch 'y-Achse' genannt - sind die als Linkkosten L ausgebildeten Bewertungen aufgetragen. Zudem ist auf der x-Achse eine Schwellauslastung F - auch 'Fairness Reservation Threshold' genannt - angedeutet. Die Auslastung AAC - auch Linkbelegung genannt - kann mithilfe von der verfügbare Zellrate AvCR und der Linkkapazität MaxCR beispielsweise wie folgt ausgedrückt werden: $AAC = MaxCR - AvCR$. Bei Berücksichtigung der Schwellauslastung F ergibt sich folgende Herleitung: $AAC = MaxCR - F - AvCR$. Gemäß der beispielhaften Linkkostenfunktion LCF ergeben sich mit zunehmender Auslastung AAC höhere Linkkosten L. Ab der Schwellauslastung F sind gegenüber den Linkkosten L für Auslastungen AAC kleiner als die Schwellauslastung F deutlich erhöhte Linkkosten L vorgesehen. Die Linkkostenfunktion LCF ist beispielsweise durch folgende wahrscheinlichkeits- und verkehrstheoretische Bewertungsvorschrift bestimmt:

$$\text{cost}(AAC) = \begin{cases} \infty, & AAC > MaxCR - CRM - F \\[2em] \displaystyle\sum_{\substack{n = MaxCR - CRM - \\ F - MaxSCR + 1}}^{MaxCR - CRM - F} \alpha_n \cdot P(n; MaxCR - CRM - F) \cdot \left[ \displaystyle\sum_{\substack{k = AAC - \\ MaxSCR + 1}}^{AAC} \beta_k(AAC) \cdot P(k; AAC) \right]^{-1}, & AAC \leq MaxCR - CRM - F \end{cases}$$

wobei für die Parameter in dieser Gleichung gilt:

$$\alpha_n = \sum_{\substack{k=MaxCR-CRM \\ -F+1-n}}^{MaxSCR} p_k \cdot \left[ 1 + \sum_{\substack{j=MaxCR-CRM \\ -F+1+k-n}}^{MaxSCR} \left( p_j \cdot \frac{P(n;MaxCR-CRM,F)}{P(n+k;MaxCR-CRM,F)} \right) \right]^{-1} ,$$

$$\beta_k(AAC) = \sum_{j=AAC-k+1}^{MaxSCR} p_j,$$

*MaxCR* (= Maximum Cell Rate) Kapazität des Übertragungswegs U,

*AAC* (= Actual Allocated Capacity) Auslastung des Übertragungswegs U; die Auslastung AAC wird in Netzen mit Flooding regelmäßig von allen Vermittlungsknoten K für die an sie angeschlossenen Übertragungswege U ermittelt und anschließend allen anderen Vermittlungsknoten K mitgeteilt,

*MaxSCR* (= Maximum Sustainable Cell Rate) Maximale durchschnittliche Zellrate, die für eine Informationsübermittlung erforderlich ist; hieraus läßt sich durch Multiplikation mit der Anzahl der Bits pro Zelle eine maximale durchschnittliche Datenrate ableiten, z.B. bei ATM-Zellen durch Multiplikation mit 424 bit/s (= 53 Byte pro Zelle * 8 Bit pro Byte),

*F* (= Fairness Reservation Threshold) Schwellauslastung eines Übertragungswegs U, ab der keine weiteren Informationsübermittlungen zugelassen werden, auch dann nicht, wenn die angeforderte Datenrate kleiner ist als die noch verfügbare,

$P(x;y,F)$ Auslastungsfunktion mit stationären Wahrscheinlichkeiten (= Steady State Probability), wobei für $x$ eine Auslastung AAC eingesetzt wird, $y$ eine gegebene Kapazität MaxCR und F eine gegebene Schwellauslastung F sei,

$P(x;y)$ Auslastungsfunktion mit stationären Wahrscheinlichkeiten, wobei für x eine Auslastung AAC eingesetzt wird und $y$ eine gegebene Kapazität MaxCR sei,

*CRM* (= Cell Rate Margin) ist eine vom ATM-Forum für einen Übertragungsweg U geforderte Pufferkapazität, wobei die Summe von mittleren Zellraten SCR (= Sustainable Cell Rate) aller Informationsübermittlungen, die entlang eines Übertragungswegs U erfolgen plus die Pufferkapazität CRM kleiner als die maximale Kapazität MaxCR des Übertragungsweg U sein soll. Die Pufferkapazität CRM dient zum Ausgleich von Zellratenschwankungen und wird üblicherweise zumindest in Abhängigkeit von den Spitzenzellraten PCR (= Peak Cell Rate) der Informationsübermittlungen und dem davon abhängenden Varianzfaktor VF (= Variance Factor) bestimmt,

$p_j$ Anforderungsfunktion mit Wahrscheinlichkeiten, daß eine Verbindung mit einer Datenrate von $j$ bit/s angefordert wird, wobei durch $(p_1,...,p_{MaxSCR})$ ein normalisiertes Verbindungsanforderungshistogramm gegeben ist.

Es sei darauf hingewiesen, daß die Linkkosten L entsprechend dieser Bewertungsvorschrift zwar allgemein von den Datenraten der Informationsübermittlungen, jedoch weder von der angeforderten Datenrate noch von irgendwelchen anderen Eigenschaften einer aktuell anstehenden Informationsübermittlungsanforderung A abhängt. Hierdurch wird vorteilhaft eine Fairness Politik bewirkt, gemäß der sich für alle Verkehrsklassen, d.h. für alle Informationsübermittlungen ungeachtet der angeforderten Datenrate, die gleiche Zurückweisungswahrscheinlichkeit ergibt, sofern vor Überschreiten der Schwellauslastung F jede Informationsübermittlung und nach Überschreiten der Schwellauslastung F keine Informationsübermittlung zugelassen wird. Weiter sei darauf hingewiesen, daß diese Bewertungsvorschrift alleinig durch Einsetzen von Parametern lösbar ist und zur Berechnung der Linkkosten L in Abhängigkeit von einer gegebenen Auslastung AAC lediglich einfache Additions-, Multiplikations- bzw. Divisionsoperationen erfordert, jedoch keine Lösung eines komplexen Gleichungssystems. Es sei zudem angemerkt, daß der Begriff "Linkkosten" nicht wörtlich im Sinne von "Kosten" interpretiert sei. So können zur Bildung der Linkkosten L in Erweiterung der obigen Bewertungsvorschrift noch beliebige, für die Übertragungswege U oder Informationsübermittlungen relevante Werte herangezogen werden wie z.B. Prioritätswerte oder Quality-of-Service-Werte.

Für das Ausführungsbeispiel sei angenommen, daß die möglichen Auslastungen AAC des Übertragungsweges {1, 2, ..., MaxCR} sind. Die durch Linkkostenfunktionen LCF bestimmten Bewertungen - im weiteren auch als cost(i) bezeichnet - werden als Funktion eines einzigen Bewertungsparameters i - z.B. der aktuellen Auslastung AAC - gebildet. Die Bewertungen cost(i) stehen hierbei mit den eingangs genannten Kosten v(i,j) nach Krishnan in folgender

Beziehung:

$$cost(i)=E[E[v(k,j)+w_k|j \in \{i+1,...,k+MaxSCR\}]|k \in \{i\text{-}MaxSCR+1,...,i\}],$$

wobei $E[f|B]$ einen bedingte Erwartungswert der Funktion f darstellt unter der Voraussetzung, daß das Ereignis B gegeben ist. Erfindungsgemäß entspricht die Bewertung cost(i) somit einem mittleren Kostenwert v(k,j), der bei Überschreiten der als Bewertungsparameter i eingesetzten Auslastungen AAC entsteht. Ausgehend hiervon wird die Bewertung cost(i) gemäß den folgenden Überlegungen ermittelt:

1) Die erwartete Zahl von zurückgewiesenen Informationsübermittlungen ist eine lineare Funktion der Zeit t mit einer Steigung BR. Diese Funktion ist somit als Zurückweisungserwartungsgerade ZW(t) ausgebildet, d.h. ZW(t) = BR * t .

2) Es sei angenommen, daß zum Zeitpunkt $t_0$ ein Informationsübermittlungswunsch besteht. Zu diesem Zeitpunk $t_0$ sei die Auslastung AAC des Übertragungsweges U durch eine den Bewertungsparameter i repräsentierende Auslastung $AAC_0$ gegeben.

3) Falls die gewünschte Informationsübermittlung zugelassen wird, wird die Zurückweisungserwartungsgerade ZW(t) sprunghaft um einen Wert v nach oben verschoben, wobei die Steigung unverändert bleibt, d.h. ZW(t) = (BR * t) + v . Die erwartete Anzahl von Zurückweisungen erhöht sich, weil durch die Informationsübermittlung momentan eine höhere Auslastung AAC entsteht. Hierbei ist die betrachtete Informationsübermittlung nur eine zufällig herausgegriffene Informationsübermittlung, d.h. das Gesamtgleichgewicht des Übertragungsweges U bleibt unverändert.

4) Falls andererseits die Informationsübermittlung zum Zeitpunkt $t_0$ nicht akzeptiert wird, bleibt die erwartete Zurückweisungserwartungsgerade ZW(t) unverändert. Nach einer Zeitspanne T wird die Auslastung AAC dennoch den Auslastungszustand $AAC_0$ überschreiten. Sobald dies geschieht, ist die Situation auf dem Übertragungsweg U dieselbe, als wenn zum Zeitpunkt $t_0$ die Informationsübermittlung akzeptiert worden wäre. Während der Zeitspanne T ist der Auslastungszustand per definitionem immer kleiner $AAC_0$, daher treten in diesem Zeitintervall keine Zurückweisungen auf. Da es sich um dieselbe Situation handelt, ist auch die Zahl der Zurückweisungen gleich v.

5) Der Mittelwert der Zeitspanne T sei mit $\tau_i$ bezeichnet. $1/\tau_i$ ist also die Übergangsrate $\ddot{U}R_i$ von den Zuständen unterhalb von $AAC_0$ in Zustände oberhalb von $AAC_0$. Die erwartete Zahl von Zurückweisungen steigt gemäß der Zurückweisungserwartungsgerade ZW(t) während der Zeitspanne $\tau_i$ um BR * $\tau i$. Folglich ist unter Berücksichtigung von 4) $v = \tau i * BR = BR / \ddot{U}R_i$ .

6) Beim Routen einer Informationsübermittlung sollen jene Übertragungswege U gewählt werden, bei denen die erwarteten Zurückweisungserwartungsgerade ZW(t) um den kleinsten Betrag v nach oben verschoben werden. Die Größe v wird also mit den Linkkosten L identifiziert, d.h. cost(i) := v , bzw.:

$$cost(i)=\frac{BR}{\ddot{U}R_i}.$$

7) Falls im Auslastungszustand $AAC_0$ der Informationsübermittlungswunsch wegen einer Kapazitätsüberschreitung zurückgewiesen werden muß, darf der Übertragungsweg U beim Routen nicht gewählt werden. In diesem Fall soll cost(i) = $\infty$ gesetzt werden.

Für einen Übertragungsweg U mit einer Kapazität MaxCR, einer Fairness Reservation Threshold F und einer Cell Rate Margin CRM ergibt sich somit im Auslastungszustand i = AAC  für die Steigung BR:

$$BR = \lambda \cdot \sum_{\substack{n=MaxCR-CRM-\\F-MaxSCR+1}}^{MaxCR-CRM-F} \alpha_n \cdot P(n;MaxCR-CRM-F) \quad ,$$

**6**

und für die Übergangsrate ÜR:

$$\ddot{U}R_{AAC} = \lambda \cdot \sum_{\substack{k=AAC-\\MaxSCR+1}}^{AAC} \sum_{j=AAC-k+1}^{MaxSCR} p_j \cdot P(k; AAC) \; .$$

Hierbei repräsentiert der Parameter $\alpha_n$ die Wahrscheinlichkeit, daß bei einem Sprung von einem Auslastungszustand n in den durch die Fairness Reservation Threshold F geschützten Bereich eine Zurückweisung eines Informationsübermittlungswunsches erfolgt. Dies wird beispielsweise wie folgt dargestellt:

$$\alpha_n = \sum_{\substack{k=MaxCR-CRM\\-F+1-n}}^{MaxSCR} p_k \cdot \left[ 1 + \sum_{\substack{j=MaxCR-CRM\\-F+1+k-n}}^{MaxSCR} \left( p_j \cdot \frac{P(n; MaxCR-CRM, F)}{P(n+k; MaxCR-CRM, F)} \right) \right]^{-1} \; .$$

Der Parameter $\lambda$ ist die Gesamtanforderungsrate des Übertragungsweges U; er kürzt sich in der erfindungsgemäßen Bewertungsvorschrift.

Für eine beispielhafte Verwendung der Erfindung in einem verbindungsorientierten Kommunikationsnetz KN, d.h. mit Informationsübermittlungen entlang von Verbindungen V, wird angenommen, daß die Übertragungswege U wie folgt ausgelastet seien: AvCR ($U_{12}$) = 20.000 kbit/s, AvCR ($U_{13}$) = 25.000 kbit/s, AvCR ($U_{14}$) = 5.000 kbit/s, AvCR ($U_{24}$) = 30.000 kbit/s und AvCR ($U_{34}$) = 25.000 kbit/s. Hierfür ergeben sich gemäß der Linkkostenfunktion LCF die Linkkosten L ($U_{12}$) = 0,175, L ($U_{13}$) = 0,140, L ($U_{14}$) = 0,421, L ($U_{24}$) = 0,115 sowie L($U_{34}$) = 0,140. In dem Kommunikationsnetz soll zudem Source-Routing zur Anwendung kommen. Es werde von dem Vermittlungsknoten $K_1$ mit einer Informationsübermittlungsanforderung A der Aufbau einer Verbindung V zu einem Verbindungsziel VZ angefordert. Dieses Verbindungsziel VZ sei als der Vermittlungsknoten $K_4$, die Verbindung V somit als Verbindung $V_{14}$ ausgebildet. Für diese Verbindung $V_{14}$ ergeben sich drei geeignete Routen $R_{14}$: 1) Route $R_{14-1}$ entlang den Übertragungswegen $U_{12}$ und $U_{24}$, 2) Route $R_{14-2}$ entlang den Übertragungswegen $U_{13}$ und $U_{34}$ , und 3) Route $R_{14-3}$ entlang dem Übertragungsweg $U_{14}$. Diese Routen $R_{14}$ werden bewertet, indem die erfindungsgemäß ermittelten Linkkosten L der Übertragungswege U jeder der Routen addiert werden. Somit ergeben sich die Routekosten RK ($R_{14-1}$) = 0,290, RK ($R_{14-2}$) = 0,280 und RK ($R_{14-3}$) = 0,421. Folglich ist die für die Verbindung V optimale Route $R_{MIN}$ ($V_{14}$) die Route $R_{14-2}$, d.h. die Verbindung V wird entlang der Route $R_{14-2}$ mit 2 Hops und nicht entlang der Route $R_{14-3}$ mit einem Hop aufgebaut. Die Tatsache, daß die Route $R_{14-2}$ schwächer ausgelastet ist als die Route $R_{14-3}$ fließt folglich stärker in die Bewertung der Routen $R_{14}$ ein als die Tatsache, daß durch die größere Anzahl Hops eine geringfügig erhöhte Verzögerungszeit bewirkt wird. Zudem wird infolge des Source-Routens die optimale Route $R_{MIN}$ aus Sicht des gesamten Kommunikationsnetzes KN bestimmt, d.h. eine Route $R_{MIN}$ wird anfangs entlang von ggf. im Vergleich zu anderen Übertragungswegen U stärker belasteten Übertragungswegen U aufgebaut, sofern hierdurch im weiteren Verlauf der Route $R_{MIN}$ besonders "gunstige" Übertragungswege erreicht werden. Im Anschluß an das Routen wird die angeforderte Verbindung $V_{14}$ entlang der verbindungsoptimalen Route $R_{MIN}$ ($V_{14}$) aufgebaut.

Es sei darauf hingewiesen, daß die Erfindung natürlich auf beliebige Kommunikationsnetze KN, insbesondere verbindungslose Kommunikationsnetze KN wie z.B. das paketorientierte Internet anwendbar ist. Im Internet wird beispielsweise jedes einzelne Paket entlang einer paketindividuellen Route R übermittelt, d.h. die Route jedes Paketes einer virtuellen Verbindung V ist unabhängig von den Routen R der Vorgänger- und Nachfolger-Paketen derselben virtuellen Verbindung V; die Vermittlungsknoten K, die beispielsweise als Internet Router ausgebildet sind, ermitteln hierbei für jedes Paket einer virtuellen Verbindung V jeweils lediglich den nächsten Vermittlungsknoten K - in der Fachwelt auch als "Hop" bezeichnet. Von jedem Router werden gemäß dem erfindungsgemäßen Verfahren die an ihn angeschlossenen Übertragungswege U bewertet. In Abhängigkeit von dieser Bewertung werden ggf. aufeinanderfolgende, zur selben virtuellen Verbindung V gehörende Pakete entsprechend den ermittelten Linkkosten L auf die Übertragungswege U verteilt. Hierbei kann es z.B. durch unterschiedliche Laufzeiten der einzelnen Pakete zu Änderungen der ursprünglichen Reihenfolge der Pakete kommen. In diesem Fall wird im Empfänger die ursprüngliche Reihenfolge der Pakete der virtuellen Verbindung V durch eine höhere Protokollschicht wiederhergestellt. Hierfür sind mehrere Verfahren bekannt, z.B. das Transport Control Protocol TCP.

Beim Routen in Netzen mit Flooding-Verfahren - beispielsweise ATM-Netzen mit PNNI-Verfahren oder IP-Netzen mit OSPF-Verfahren - ergeben sich weitere schöne Vorteile. Hierbei erfolgt z.B. nach jedem Flooding in den Vermittlungsknoten K eine Neubewertung der Übertragungswege U. Hierzu werden erfindungsgemäß mit Hilfe der Linkkostenfunktionen LCF für die Übertragungswege U neue Linkkosten L in Abhängigkeit von den mit dem Flooding mitgeteilten Auslastungen AAC bestimmt. Anschließend werden die Routen R auf Basis der neu bestimmten Linkkosten L bewertet und angeforderte Verbindungen V entlang der für diese optimalen Routen RMIN (V) aufgebaut. Der Aufwand für Routen wird vorteilhaft weiter gesenkt, sofern überlastete und/oder unterbrochene Übertragungswege U zumindest während des Zeitraums der Überlastung und/oder Unterbrechung mit unendlich hohen Linkkosten L bewertet werden, womit sie für das Routen ausscheiden.

**Patentansprüche**

1. Verfahren zur Bewertung von Übertragungswegen (U) eines Kommunikationsnetzes (KN), in dem Informationsübermittlungen mit unterschiedlichen Datenraten erfolgen, bei dem

   die Bewertung nach Maßgabe einer Bewertungsvorschrift, deren Bewertungsaufwand im wesentlichen linear von der Kapazität (MaxCR) des jeweiligen Übertragungswegs (U) abhängt, erfolgt.

2. Verfahren nach Anspruch 1,
   **dadurch gekennzeichnet,**

   daß die Bewertungen jeweils in Abhängigkeit von zumindest einem variablen Bewertungsparameter erfolgen.

3. Verfahren nach einem der Ansprüche 1 oder 2,
   **dadurch gekennzeichnet,**

   daß die Bewertungen jeweils in Abhängigkeit von einem einzigen variablen Bewertungsparameter erfolgen und alle weiteren Bewertungsparameter konstant sind.

4. Verfahren nach einem der Ansprüche 3,
   **dadurch gekennzeichnet,**

   daß der variable Bewertungsparameter unabhängig ist von einer gegebenen Informationsübermittlungsanforderung (A).

5. Verfahren nach einem der Ansprüche 3 oder 4,
   **dadurch gekennzeichnet,**

   daß der variable Bewertungsparameter jeweils als Auslastung (AAC) des Übertragungswegs (U) ausgebildet ist.

6. Verfahren nach einem der vorhergehenden Ansprüche,
   **dadurch gekennzeichnet,**

   daß die Bewertung des Übertragungswegs (U) jeweils bei Auslastungen (AAC), die größer sind als dessen Schwellauslastung (F), derart ausgebildet ist, daß entlang diesem keine zusätzlichen Informationsübermittlungen erfolgen.

7. Verfahren nach Anspruch 6,
   **dadurch gekennzeichnet,**

   daß die Schwellauslastung (F) eines Übertragungswegs (U) jeweils gleich seiner Kapazität (MaxCR) abzüglich der maximalen durchschnittlichen Datenrate (MaxSCR) ist, die die Informationsübermittlungen höchstens erfordern.

8. Verfahren nach einem der vorhergehenden Ansprüche,
   **dadurch gekennzeichnet,**

   daß die Bewertung gemäß folgender Bewertungsvorschrift erfolgt:

$$
cost(AAC) = \begin{cases} \infty, & AAC > MaxCR - CRM - F \\ \sum\limits_{\substack{n = MaxCR - CRM - \\ F - MaxSCR+1}}^{MaxCR-CRM-F} \alpha_n \cdot P(n, MaxCR - CRM - F) \cdot \left[ \sum\limits_{\substack{k = AAC - \\ MaxSCR+1}}^{AAC} \beta_k(AAC) \cdot P(k; AAC) \right]^{-1}, & AAC \le MaxCR - CRM - F \end{cases}
$$

wobei für deren Parameter gilt:

$$
\alpha_n = \sum\limits_{\substack{k = MaxCR - CRM \\ -F+1-n}}^{MaxSCR} p_k \cdot \left[ 1 + \sum\limits_{\substack{j = MaxCR - CRM \\ -F+1+k-n}}^{MaxSCR} \left( p_j \cdot \frac{P(n, MaxCR - CRM, F)}{P(n+k; MaxCR - CRM, F)} \right) \right]^{-1}
$$

$$
-\beta_k(AAC) = \sum\limits_{j = AAC - k+1}^{MaxSCR} p_j
$$

- cost      die ermittelte Bewertung,
- P(x;y,F)      eine Auslastungswahrscheinlichkeit,
- P(x;y)      eine weitere Auslastungswahrscheinlichkeit,
- x      eine Auslastung,
- y      eine Kapazität,
- CRM      eine Cell Rate Margin, und
- $p_j$      Wahrscheinlichkeit, daß für eine Informationsübermittlung eine Datenrate von j bit/s erforderlich ist.

# FIG 1

# FIG 2

Europäisches
Patentamt

**EUROPÄISCHER RECHERCHENBERICHT**

Nummer der Anmeldung

EP 99 11 0240

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | YEONG-SUNG LIN ET AL: "THREE ALGORITHMS FOR ROUTING AND FLOW CONTROL IN VIRTUAL CIRCUIT NETWORKS" COMMUNICATIONS: CONNECTING THE FUTURE, SAN DIEGO, DEC. 2- 5, 1990, Bd. 1, 2. Dezember 1990 (1990-12-02), Seiten 339-343, XP000218750 INSTITUTE OF ELECTRICAL AND ELECTRONICS ENGINEERS ISBN: 0-87942-632-2 * Absatz [02.2] * | 1,2 | H04Q11/04 H04L12/56 |
| A | MEHMET ALI M K ET AL: "NEURAL NETWORKS FOR SHORTEST PATH COMPUTATION AND ROUTING IN COMPUTER NETWORKS" IEEE TRANSACTIONS ON NEURAL NETWORKS, Bd. 4, Nr. 6, 1. November 1993 (1993-11-01), Seiten 941-954, XP000441881 ISSN: 1045-9227 * Seite 947, linke Spalte, Zeile 30 - Zeile 38 * * Absatz [IV.A] * * Seite 951, linke Spalte, Zeile 22 - Zeile 28 * | 1,2 | |
| A | PAOLUCCI M ET AL: "A NEW COST FUNCTION TO SOLVE MULTI-ATTRIBUTE DECISION MAKING PROBLEMS WITH NON SEPARABLE ATTRIBUTES" DECISION AIDING FOR COMPLEX SYSTEMS, CHARLOTTESVILLE, VA., OCT. 13 - 16, 1991, Bd. 3, 13. Oktober 1991 (1991-10-13), Seiten 1961-1965, XP002049219 INSTITUTE OF ELECTRICAL AND ELECTRONICS ENGINEERS ISBN: 0-7803-0233-8 * das ganze Dokument * | 1-5 | RECHERCHIERTE SACHGEBIETE (Int.Cl.7) H04Q H04L |

Der vorliegende Recherchenbericht wurde für alle Patentansprüche erstellt

| Recherchenort | Abschlußdatum der Recherche | Prüfer |
|---|---|---|
| DEN HAAG | 4. Oktober 1999 | STAESSEN, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D . in der Anmeldung angeführtes Dokument
L : aus anderen Gründen angeführtes Dokument

& : Mitglied der gleichen Patentfamilie, übereinstimmendes Dokument

EPO FORM 1503 03 82 (P04C03)